# FASCICULE DE BREVET EUROPEEN

(11) **EP 1 493 072 B1**
(45) Date de publication et mention de la délivrance du brevet: **08.10.2008**
(21) Numéro de dépôt: 03745811.4
(22) Date de dépôt: 02.04.2003
(51) Int. Cl.: G06F 21/02

(54) **PROCEDE ET DISPOSITIF DE PROTECTION DE DONNEES NUMERIQUES STOCKEES DANS UNE MEMOIRE**
VERFAHREN UND EINRICHTUNG ZUM SCHUTZ VON IN EINEM SPEICHER GESPEICHERTEN DIGITALEN DATEN
METHOD AND DEVICE FOR PROTECTING DIGITAL DATA STORED IN A MEMORY

(30) Priorité: 08.04.2002 FR 0204321
(43) Date de publication de la demande: 05.01.2005
(73) Titulaire: Nagra Thomson Licensing, 92100 Boulogne-Billancourt (FR)
(72) Inventeur: DAUVOIS, Jean Luc, F-75116 Paris (FR)
(74) Mandataire: Wenger, Joel-Théophile
(86) Numéro de dépôt international: PCT/FR2003/001024
(87) Numéro de publication internationale: WO 2003/085496

(56) Documents cités:
- EP-A- 0 984 403
- US-A- 5 818 738
- US-A- 6 047 068
- US-B1- 6 233 339

## Description

### Domaine technique

L'invention se situe dans le domaine de la lutte contre le piratage du contenu des mémoires de stockage de données et concerne plus particulièrement un procédé de protection de données numériques stockées dans une mémoire d'une carte à puce et préalablement cryptées par une clé de chiffrement.

L'invention concerne également une carte à puce et un dispositif de protection de la mémoire de cette carte à puce.

### Etat de la technique antérieure

Le piratage d'une carte à puce se fait en général par l'extraction du code ROM et des données secrètes contenues dans la mémoire de la carte. Une technique connue pour éviter que ces données sensibles ne soient utilisables après une extraction frauduleuse consiste à les chiffrer au moyen de clés secrètes avant de les stocker dans la mémoire de la carte. Les clés de chiffrement utilisées sont également stockées dans cette mémoire et sont de ce fait également exposées au risque d'une extraction frauduleuse au même titre que les données utiles mémorisées. Aussi, cette technique ne permet-elle pas de lutter efficacement contre le piratage.

Le brevet Américain US 6,233,339 décrit un procédé de protection de données numériques stockées dans une mémoire d'une carte à puce. Les données sont préalablement cryptées par une clé de chiffrement. La carte à puce comprend une capsule scellée contenant un fluide : la pression du fluide reste donc constante. La clé de chiffrement est calculée à partir d'une mesure de la pression. Les données encryptées avec la clé de chiffrement sont stockées dans la mémoire. Lors d'une lecture des données, la pression est remesurée et la clé de chiffrement recalculée : les données encryptées peuvent ainsi être décryptées.

Le brevet Américain 5,818,738 décrit un procédé pour tester l'authenticité d'un support de données, par exemple un porte-monnaie électronique. Le support de données comprend un circuit intégré. Le test repose sur le caractère unique d'une propriété physique du circuit intégré et fait intervenir un système-hôte. Le support est d'abord initialisé. La propriété physique est mesurée et stockée en mémoire sous une forme encryptée.

Lors d'un test de l'authenticité du support, la propriété physique est mesurée une seconde fois. La valeur mesurée est comparée à la valeur de la propriété physique mesurée auparavant et stockée en mémoire. Si les deux valeurs sont différentes, le support est considéré comme faux.

Le but de l'invention est d'assurer une sécurité optimale des données mémorisées sous forme cryptée dans une mémoire.

Un autre but de l'invention est de lier intimement les clés de chiffrement à un ou plusieurs paramètres de fonctionnement intrinsèque à au moins un élément composant la carte. Ces paramètres de fonctionnement pouvant être des grandeurs physiques dépendant de la structure physique de la mémoire ou du microcontrôleur associé à cette mémoire ou encore des grandeurs reflétant un comportement déterminé de cette mémoire et du microcontrôleur dans des conditions particulières d'utilisation.

### Exposé de l'invention

De façon plus précise, l'invention concerne un procédé et un dispositif de protection de données numériques stockées sous forme cryptée dans une mémoire qui peut être du type EEPROM ou du type flash par exemple.

Le procédé selon l'invention est caractérisé dans la revendication 1.

Selon un mode de réalisation, la tension analogique d'écriture est fournie par une pompe de charge.

Le dispositif selon l'invention est caractérisé dans la revendication 4.

L'invention concerne également une carte de contrôle d'accès comportant une unité centrale de traitement de données et le dispositif de l'une des revendications 4 à 7.

Selon une caractéristique de l'invention le module de calcul est fonctionnellement indépendant de l'unité centrale de sorte que le calcul de la clé de chiffrement est simplement initié et non supervisé par l'unité centrale de traitement.

Selon un mode particulier de réalisation de l'invention, le module de calcul comporte une pompe de charge destinée à fournir une tension analogique d'écriture des données dans la carte à puce, un convertisseur analogique/numérique destiné à convertir un signal analogique extrait de ladite tension analogique en une séquence numérique constituant la clé de chiffrement.

### Brève description des dessins

D'autres caractéristiques et avantages de l'invention ressortiront de la description qui va suivre, prise à titre d'exemple non limitatif, en référence aux figures annexées, dans lesquelles :
- la figure 1 représente un schéma général d'un dispositif selon l'invention.
- la figure 2 représente schématiquement un mode particulier de réalisation du dispositif de la figure 1.
- la figure 3 représente une courbe illustrant une mise en oeuvre de l'invention dans le cas de l'exemple illustré par la figure 2.

### Exposé détaillé de modes de réalisation particuliers

L'invention va maintenant être décrite dans le cadre de la protection des données stockées dans la mémoire d'une carte à puce.

Les carte à puces sont largement utilisées notamment pour mémoriser des paramètres de contrôle permettant l'accès à des données ou services tels que par exemple des programmes audiovisuels cryptés. Dans ce type d'application, les informations nécessaires au désembrouillage sont transmises dans des messages de contrôle d'accès, appelés ECM (Entitlement Control Message) et sont générés à partir des données d'entrées suivantes :
- un mot de contrôle (Control Word) destiné à initialiser la séquence de désembrouillage,
- une clé de service (Service Key) utilisée pour embrouiller le mot de contrôle, pour un groupe d'un ou de plusieurs utilisateurs,
- une clé utilisateur (user key) utilisée pour embrouiller la clé de service.

Préalablement, la clé de service est transmise, dans des messages appelés EMM générés à partir d'une clé utilisateur individuelle ou de groupe.

Les ECM sont notamment constitués du mot de contrôle et traités par la clé de service et sont transmis aux abonnés à intervalles réguliers.

Les EMM sont notamment constitués de la clé de service et traités par la ou les clés utilisateurs, et sont également transmis aux abonnés à intervalles réguliers.

A la réception, le principe de décryptage consiste à retrouver la clé de service à partir de la ou des clés utilisateurs contenue dans la mémoire d'une carte à puce (EMM). Cette clé de service est ensuite elle-même utilisée pour décrypter les ECM afin de retrouver le mot de contrôle permettant l'initialisation du système de désembrouillage.

Comme cela a été expliqué précédemment, le contenu de la mémoire de la carte à puce peut être extrait et réutilisé de façon frauduleuse pour retrouver les clés de traitement des EMM et des ECM qui, directement ou indirectement, permettent de calculer le mot de contrôle permettant l'initialisation du système de désembrouillage.

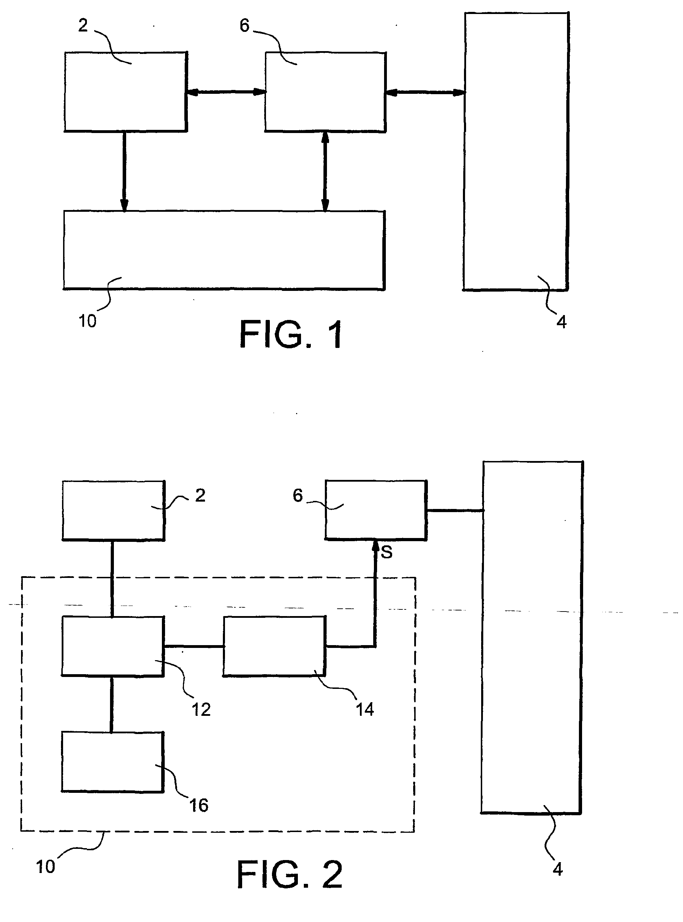

La figure 1 représente un schéma bloc général d'un dispositif à mémoire comportant une unité centrale de traitement 2 reliée à une mémoire 4 via un module de cryptage/décryptage 6. Un module de calcul 10, agencé extérieurement à l'unité centrale 2, est également relié au module de cryptage/décryptage 6.

Lorsque des données traitées dans l'unité centrale 2 doivent être stockées dans la mémoire 4, l'unité de traitement 2 envoie au module de calcul 10 un signal d'activation. A la réception de ce signal, le module de calcul 10 définit une clé de chiffrement des données à mémoriser et transmet cette clé au module de cryptage/décryptage 6.

Selon une caractéristique essentielle de l'invention, la clé de chiffrement est calculée au moment de la mémorisation des données dans la mémoire 4 en fonction d'au moins un paramètre de fonctionnement intrinsèque à la mémoire 4. La clé de chiffrement ainsi calculée n'est pas stockée dans la mémoire 4. Or le piratage des cartes à puces consiste généralement à extraire les programmes de calcul mis en oeuvre dans l'unité centrale 2 et les données sensibles contenues dans la mémoire 4 associée à l'unité centrale 2. Aussi, en cas d'extraction frauduleuse de ces programmes et du contenu de la mémoire 4, les données extraites seront inutilisables sans la clé de chiffrement qui est calculée dynamiquement lors de la mémorisation desdites données et lors de la lecture de ces données.

Préférentiellement, cette clé est calculée en fonction d'un paramètre ou d'une combinaison de plusieurs paramètres de fonctionnement intrinsèque à ladite mémoire 4.

La clé de chiffrement définie est inaccessible de l'extérieur, du fait que le module de calcul 10 est indépendant de l'unité centrale 2.

En fonctionnement, au moment du transfert des données de l'unité centrale 2 vers le module de calcul 10, ce dernier reçoit de l'unité centrale 2 un premier signal d'activation, lui permettant de commencer le calcul de la clé de chiffrement. La clé ainsi calculée est transmise au module de cryptage/décryptage 6 qui l'utilise pour chiffrer les données avant que ces dernières ne soient mémorisées dans la mémoire 4.

Lorsque les données cryptées doivent être lues, l'unité de traitement 2 envoie au module de calcul 10 un deuxième signal d'activation pour recalculer dynamiquement la clé de chiffrement qui est ensuite utilisée par le module de cryptage/décryptage 6 pour décrypter lesdites données et les transmettre à l'unité centrale 2.

Un exemple particulier de calcul de la clé de chiffrement va être décrit maintenant en référence à la figure 2 représentant un exemple de réalisation de l'invention dans lequel le module 10 est constitué par la pompe de charge 12 destinée à fournir une tension analogique d'écriture des données dans la mémoire 4, un convertisseur analogique-numérique (CAN) 14 destiné à convertir un signal analogique extrait de ladite tension analogique en une séquence numérique constituant la clé de chiffrement, une horloge 16 reliée à la pompe de charge 12 destinée à fixer la durée du signal analogique extrait de la tension d'écriture.

La tension analogique peut être fournie par un générateur de tension analogique indépendant de la pompe de charge.

Dans un autre mode de réalisation non représenté, la carte à puce peut comporter un circuit numérique indépendant de l'unité centrale 2 qui fournit directement une séquence numérique S.

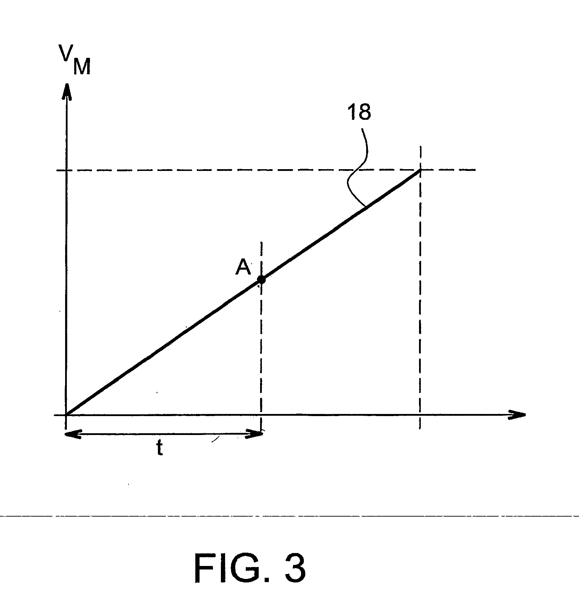

La figure 3 représente schématiquement l'évolution en fonction du temps de la tension d'écriture 18 des données numériques provenant de l'unité centrale 2 dans la mémoire 4. Une valeur A de la tension 18 est fixée par programmation de la durée t au moyen de l'horloge 16. Cette valeur A est ensuite convertie par le CAN 14 en une séquence numérique S qui est utilisée par le module de cryptage/décryptage 6 pour crypter/décrypter les données numériques.

A chaque remise à zéro, le module de calcul 10 calcule la clé de chiffrement en prenant en considération la durée t programmée au moyen de l'horloge 16. Ainsi, si un pirate extrait les données numériques, il ne pourra pas recalculer la clé de chiffrement qui dépend de la valeur A qui est intrinsèque à la carte authentique. La clé de chiffrement est calculée pour la première fois lors de la personnalisation de la carte à puce.

Dans une variante de réalisation de l'invention, plusieurs durées t correspondant à plusieurs valeurs A peuvent être préprogrammées afin d'être utilisées successivement pour calculer plusieurs clés de chiffrement différentes, chaque clé pouvant être utilisée pendant une période prédéfinie.

Dans une autre variante de réalisation, la durée t peut être modifiée à distance.

## Revendications

1. Procédé de protection de données numériques stockées dans une mémoire (4) d'une carte à puce à l'aide d'une clé de chiffrement, ladite clé de chiffrement étant définie dynamiquement en fonction d'au moins un paramètre de fonctionnement intrinsèque à ladite carte à puce, **caractérisé en ce que** ce procédé comprend les étapes suivantes :
lors d'une phase d'écriture des données dans la mémoire (4),
a) dériver un signal analogique d'une tension analogique (18) d'écriture dans la **mémoire (4)** générée dans ladite carte à puce, ledit signal analogique, **représentant le paramètre intrinsèque,** étant dérivé de la tension analogique à une durée programmée (t),
b) convertir ce signal en une séquence numérique,
c) chiffrer les données à mémoriser au moyen de ladite séquence numérique,
d) stocker les données chiffrées dans la mémoire (4),
. et lors d'une phase ultérieure de la lecture des données mémorisées,
- recalculer la clé de chiffrement définie aux étapes a et b, et
- décrypter les données au moyen de la clé recalculée.

2. Procédé selon la revendication 1, **caractérisé en ce que** lesdites données numériques cryptées sont des clés numériques destinées au codage cryptographique de messages EMM et ECM.

3. Procédé selon la revendication 1, **caractérisé en ce que** la tension analogique (18) est fournie par une pompe de charge (12) d'écriture des données en mémoire.

4. Dispositif de protection de données numériques stockées dans une mémoire (4) d'une carte à puce et préalablement cryptées par une clé de chiffrement, comportant un module de calcul (10) apte à définir la clé de chiffrement desdites données en fonction d'au moins un paramètre de fonctionnement intrinsèque à ladite carte à puce et **comprenant** un générateur de tension analogique **d'écriture dans la mémoire (4), caractérisé en ce que** le module de calcul (10) comprend des moyens pour extraire un signal analogique de ladite tension analogique (18) à une durée programmée (t), **ce signal analogique représentant le paramètre intrinsèque,** et des moyens pour convertir ce signal analogique en une séquence numérique pour constituer la clé de chiffrement.

5. Dispositif selon la revendication 4, **caractérisé en ce que** lesdites données numériques sont des clés numériques destinées au codage cryptographique de messages EMM et ECM.

6. Dispositif selon la revendication 4, **caractérisé en ce que** ladite tension analogique est délivrée par une pompe de charge d'écriture des données en mémoire.

7. Dispositif selon la revendication 4, **caractérisé en ce que** le module de calcul (10) comporte un convertisseur analogique/numérique (14).

8. Carte à puce *comprenant le dispositif de l'une des revendications* 4 *à 7* et comportant une unité centrale de traitement (2) de données.

9. Carte à puce selon la revendication 8, **caractérisé en ce que** le module de calcul (10) est fonctionnellement indépendant de l'unité centrale (2) de sorte que le calcul de la clé de chiffrement n'est pas supervisé par l'unité centrale de traitement (2).

10. Carte à puce selon la revendication 8, **caractérisée en ce qu'**elle comporte un circuit numérique indépendant de l'unité centrale (2) destiné à générer une séquence numérique (S) constituant la clé de chiffrement.

11. Carte à puce selon la revendication 8, **caractérisée en ce que** le module de chiffrement (6) est un circuit logique.

12. Carte à puce selon l'une des revendications 8 à 11, **caractérisée en ce que** la mémoire (4) est du type EEPROM.

13. Carte à puce selon la revendication 12, **caractérisée en ce que** la mémoire (4) est du type flash.

## Claims

1. Method for protecting digital data stored in a memory (4) of a chip card by an encryption key, said encryption key being dynamically defined as a function of at least an operating parameter intrinsic to said chip card, **characterized in that** this method comprises the following steps:
. during a writing phase of data into the memory (4),
a) deriving an analog signal from an analog voltage (18) for writing in the memory (4) generated in said chip card, said analog signal representing the intrinsic parameter, being derived from the analog voltage at a predefined time (t),
b) converting this signal into a digital sequence,
c) encrypting data to be memorized by means of the digital sequence,
d) storing the encrypted data into the memory (4),
. during a subsequent phase of reading stored data,
- calculating the encryption key as defined in the steps a and b and,
- decrypting the data thanks to the recalculated key.

2. Method according to claim 1, **characterised in that** said encrypted digital data are digital keys for cryptographic coding of EMM and ECM messages.

3. Method according to claim 1, **characterised in that** said operating parameter intrinsic to the chip card is provided by a charge pump (12) of writing data in memory.

4. Device for protecting digital data stored in a memory (4) of a chip card and previously encrypted by an encryption key, comprising a calculation module (10) able to define the encryption key of said data according to at least one operating parameter intrinsic to said chip card and comprising an analog voltage generator (18) for writing into the memory (4), **characterized in that** the calculation module (10) comprises means for extracting an analog signal from said analog voltage (18) at a predefined time (t), this analog signal representing the intrinsic parameter, and means to convert this analog signal into a digital sequence for forming the encryption key.

5. Device according to claim 4, **characterised in that** said encrypted digital data are digital keys for cryptographic coding of EMM and ECM messages.

6. Device according to claim 4, **characterised in that** said operating parameter intrinsic to the chip card is provided by a charge pump (12) of writing data in memory.

7. Device according to claim 4, **characterized in that** the calculation module (10) comprises an analogue/digital converter (14).

8. Chip card comprising the device of one of the claims 4 to 7 and comprising a processing central unit (2) of data.

9. Chip card of claim 8, **characterised in that** the calculation module (10) is functionally independent from the central unit (2) in order that the calculation of the encryption key is not supervised by the central processing unit (2).

10. Chip card according to claim 8, **characterised in that** it comprises a digital circuit independent of the central unit (2) to generate the digital sequence (S) forming the encryption key.

11. Chip card according to claim 8, **characterised in that** the encryption module (6) is a logic circuit.

12. Chip card according to one of the claims 8 to 11, **characterised in that** the memory (4) is of the EEPROM type.

13. Chip card according to claim 12, **characterised in that** the memory (4) is of the flash type.

## Patentansprüche

1. Verfahren zum Schutz von digitalen Daten, die mit Hilfe eines Verschlüsselungsschlüssels in einem Speicher (4) einer Chipkarte gespeichert werden, wobei der Verschlüsselungsschlüssel in Abhängigkeit von zumindest einem intrinsischen Betriebsparameter der Chipkarte dynamisch definiert wird, **dadurch gekennzeichnet, dass** dieses Verfahren die folgenden Schritte umfasst:
• während einer Phase des Einschreibens der Daten in den Speicher (4)
a) Ableitung eines Analogsignals aus einer Analogspannung (18) des Schreibens in den Speicher (4), die in der Chipkarte erzeugt wird, wobei das Analogsignal, das den intrinsischen Parameter darstellt, bei einer programmierten Zeitdauer (t) aus der Analogspannung abgeleitet wird,
b) Umwandlung dieses Signals zu einer Zahlenfolge,
c) Verschlüsselung der zu speichernden Daten mittels der Zahlenfolge,
d) Speicherung der verschlüsselten Daten im Speicher (4),
• und während einer späteren Phase des Auslesens der gespeicherten Daten
- erneute Berechnung des in Schritten (a) und (b) definierten Verschlüsselungsschlüssels und
- Entschlüsselung der Daten mittels des erneut berechneten Schlüssels.

2. Verfahren nach Anspruch 1, **dadurch gekennzeichnet, dass** die verschlüsselten digitalen Daten für die kryptographische Kodierung von EMM- und ECM-Nachrichten bestimmte Zahlenschlüssel sind.

3. Verfahren nach Anspruch 1, **dadurch gekennzeichnet, dass** die Analogspannung (18) durch eine Ladungspumpe (12) für das Datenschreiben in den Speicher geliefert wird.

4. Vorrichtung zum Schutz von digitalen Daten, die in einem Speicher (4) einer Chipkarte gespeichert und im Voraus mit einem Verschlüsselungsschlüssel verschlüsselt worden sind, wobei die Vorrichtung ein Rechenmodul (10) umfasst, das in der Lage ist, den Schlüssel für die Verschlüsselung der Daten in Abhängigkeit von zumindest einem intrinsischen Betriebsparameter der Chipkarte zu definieren, und wobei die Vorrichtung einen Generator für die Analogspannung des Einschreibens in den Speicher (4) umfasst, **dadurch gekennzeichnet, dass** das Rechenmodul (10) Mittel umfasst, um aus der Analogspannung (18) bei programmierter Zeitdauer (t) ein Analogsignal herauszuziehen, wobei dieses Analogsignal den intrinsischen Parameter darstellt, sowie Mittel, um dieses Analogsignal in eine Zahlenfolge umzuwandeln, die den Verschlüsselungsschlüssel bildet.

5. Vorrichtung nach Anspruch 4, **dadurch gekennzeichnet, dass** die digitalen Daten für die kryptographische Kodierung von EMM- und ECM-Nachrichten bestimmte Zahlenschlüssel sind.

6. Vorrichtung nach Anspruch 4, **dadurch gekennzeichnet, dass** die Analogspannung durch eine Ladungspumpe für das Datenschreiben in den Speicher geliefert wird.

7. Vorrichtung nach Anspruch 4, **dadurch gekennzeichnet, dass** das Rechenmodul (10) einen Analog-Digital-Wandler (14) umfasst.

8. Chipkarte *mit der Vorrichtung nach einem der Ansprüche 4 bis 7* und einer zentralen Datenverarbeitungseinheit (2).

9. Chipkarte nach Anspruch 8, **dadurch gekennzeichnet, dass** das Rechenmodul (10) funktionell insofern von der Zentraleinheit (2) unabhängig ist, dass die Berechnung des Verschlüsselungsschlüssels nicht von der zentralen Verarbeitungseinheit (2) überwacht wird.

10. Chipkarte nach Anspruch 8, **dadurch gekennzeichnet, dass** sie einen von der Zentraleinheit (2) unabhängigen digitalen Schaltkreis umfasst, der dafür bestimmt ist, eine den Verschlüsselungsschlüssel darstellende Zahlenfolge (S) zu bilden.

11. Chipkarte nach Anspruch 8, **dadurch gekennzeichnet, dass** das Verschlüsselungsmodul (6) ein Logik-Schaltkreis ist.

12. Chipkarte nach einem der Ansprüche 8 bis 11, **dadurch gekennzeichnet, dass** der Speicher (4) ein Speicher des EEPROM-Typs ist.

13. Chipkarte nach Anspruch 12, **dadurch gekennzeichnet, dass** der Speicher (4) ein Speicher des Flash-Typs ist.
